# EUROPEAN PATENT APPLICATION

(11) **EP 2 465 760 A1**
(43) Date of publication of application: **20.06.2012**
(21) Application number: 11193030.1
(22) Date of filing: 12.12.2011
(51) Int. Cl.: B62M 1/04, B62M 6/45

(54) **Wheeled device with lever pedal mechanism**

(30) Priority: 14.12.2010 US 967331
(71) Applicant: Totex Design Limited, Hong Kong (HK)
(72) Inventor: Tong, Gabriel Yui Lung, Hong Kong (CN)
(74) Representative: MFG Patentanwälte Meyer-Wildhagen Meggle-Freund Gerhard Partnerschaft

(57) **Abstract**

A pedal mechanism (100) for a wheeled device (20) includes a frame (22), at least one wheel (74) having a geared hub (78), and the at least one wheel (74) rotatably supported by the frame (22). At least one pedal lever (102) is pivotably mounted to the frame (22) at a mounted end (104) and each lever (102) has a drive end (106) opposite the mounted end (104). A rotatable drive gear (110) is carried by the frame (22) and includes an axle (112) extending from at least one side. A crank (114) is coupled between the pedal lever drive end (106) and the axle (112). An endless chain (124) is coupled between the geared hub (78) and the rotatable drive gear (110) so that movement of the at least one pedal lever (102) causes rotation of the wheel (74). The wheeled device (20) may also include a system controller (140) and a motor (50), wherein a user controller panel (62) allows for combined use of the pedal mechanism (100) and the motor (50).

## Description

### TECHNICAL FIELD

Generally, the present invention is directed to locomotion devices. In particular, the invention is directed to locomotion devices which are self-propelled and that may be assisted with an electric motor. Specifically, the present invention is directed to devices that convert a person's natural stepping motion into rotational wheel motion.

### BACKGROUND ART

For conventional bicycles, the pedal motion is always circular. In other words, as a person is seated on the bicycle seat, their feet rest on diametrically opposed pedals which are moved by the rider to rotate a drive gear which, in turn, by its' connection through a drive chain, drives or rotates a geared rear wheel. Such circular motion of the feet is difficult when a person is in a standing position and not seated. As a result, the rotary pedals are not suitable for riding when standing on the pedals in an upright position. Indeed, pedals on a conventional seated bicycle can turn freely against its' crank, which allows the transmission of the directional manual pedaling force to the rotation of a flywheel. If the pedals are able to turn or swing freely against the crank, it adds difficulty to the balancing of the standing rider. Moreover, skilled artisans will appreciate that as the pedals approach their apex position, the normal force exerted downward on the pedals is directly opposed by the reactive forces of the crankshaft creating a dead-center effect. As a result, a continually applied force is difficult to obtain. This is especially problematic when the rider is going up an inclined surface. This significantly slows the rider and may force them to walk the bicycle. Additionally, at slower speeds maneuverability of the bicycle is reduced. This can be a nuisance in congested city areas. Moreover, most bicycles usually have a long lengthwise frame which also makes steering in congested city areas difficult.

Conventional bicycles utilize pedals with a standard crank arm length of about 170 mm, thereby creating a circular 340 mm diameter of pedaling movement. As will be appreciated, this is over the total height of two standard stair steps together. However, it is believed that this range of motion is not necessary in order to propel the bicycle or wheeled device. Indeed, it is believed that there is a need in the art to more efficiently use the rider's body weight and, as a result, allow for reduction in the length of the crank arm and the ability to generate force so as to propel the bicycle.

### SUMMARY OF THE INVENTION

In light of the foregoing, it is a first aspect of the present invention to provide a wheeled device with lever pedal mechanism.

Another aspect of the present invention is to provide a pedal mechanism for a wheeled device comprising a frame, at least one wheel having a geared hub, the wheel rotatably supported by the frame, at least one pedal lever pivotably mounted to the frame at a mounted end, each lever having a drive end opposite the mounted end, a rotatable drive gear carried by the frame, the rotatable drive gear having an axle extending from at least one side, a crank coupled between the pedal lever drive end and the axle, and an endless chain coupled between the geared hub and the rotatable drive gear, wherein movement of the at least one pedal lever causes rotation of the wheel.

Yet another aspect of the present invention is to provide a wheeled locomotion device, comprising a frame, at least one wheel coupled to the frame, a human-effort pedal mechanism coupled to and adapted to rotate the at least one wheel, the pedal mechanism having a motion detection sensor, a motor coupled to and adapted to rotate the at least one wheel, a system controller connected to and receiving input from the motor and the motion detection sensor, and a user control panel connected to the system controller, the system controller programmed to receive input from the motor, receive input from the motion detection sensor, receive user input from the user control panel as to at least one of a speed setting and a mode setting, and generate a control signal to selectively adjust operation of the motor based on at least two of the inputs.

### BRIEF DESCRIPTION OF THE DRAWINGS

This and other features and advantages of the present invention will become better understood with regard to the following description, appended claims, and accompanying drawings wherein:
Fig. 1 is an elevational view of a self-propelled locomotion device according to the concepts of the present invention;
Fig. 2 is a partial top view of the locomotion device according to the concepts of the present invention and showing selected aspects of a pedal mechanism according to the concepts of the present invention;
Fig. 3 is a detailed elevational view of the pedal mechanism according to the concepts of the present invention;
Figs. 4A-4D show the various positions of a pedal lever that is part of the pedal mechanism in various pedaling positions;
Figs. 5A and 5B show a detailed view of the pedal mechanism and the forces angularly applied to the pedal levers so as to eliminate a dead-center effect;
Fig. 6 is a partial cross-sectional view taken along line 6-6 of Fig. 2 showing details of the pedal mechanism according to the concepts of the present invention;
Fig. 7 is a partial cross-sectional view taken along line 7-7 of Fig. 2 showing details of the pedal mechanism according to the concepts of the present invention; and
Fig. 8 is a schematic diagram of a controller utilized to operate the device according to the concepts of the present invention.

### BEST MODE FOR CARRYING OUT THE INVENTION

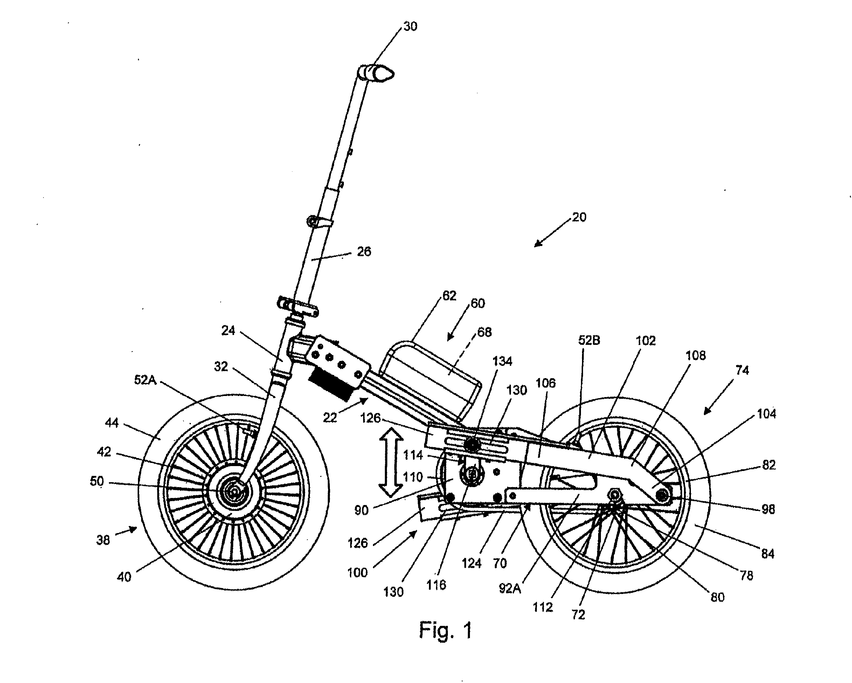

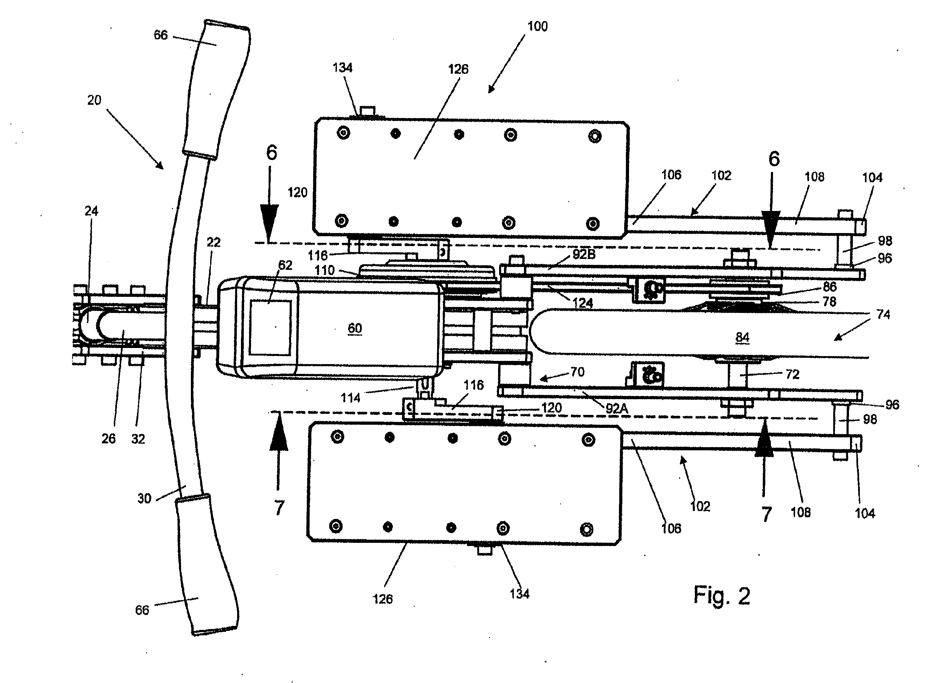

Referring now to all of the figures and in particular to Figs. 1 and 2, it can be seen that a self-propelled locomotion device is designated generally by the numeral 20. The device is basically a two-wheel device without a seat that utilizes an up/down pedal motion. It will be appreciated that the device is also applicable to devices with one, three, four or more wheels and is provided without a seat such that the rider can constantly be in a standing position. However, the concepts of the present invention are applicable to a wheeled device that utilizes a seat if desired. In some embodiments the device may be provided with an electric-power assist. Indeed, as will be appreciated as the description proceeds, the up/down pedal motion has certain advantages over a circular pedal motion and such a feature can be applied to manual, power driven or power assisted bicycles, tricycles and quadric-cycles with a seat or without a seat.

The device 20 includes a frame 22 which maintains two wheels as shown or which can be configured to be used with any number of wheels. At one end of the frame 22 is a collar 24 which allows for rotatable receipt of a steering column 26. The height of the steering column can be adjusted as needed for the rider. Extending substantially perpendicularly from one end and both sides of the steering column 26 is a handlebar 30 which may carry user-actuated braking mechanisms and/or other controls utilized to operate the device 20. Extending from the steering column 26 at an end opposite the handlebar 30 is a front fork 32 which moves in a rotational direction as controlled by the rider's movement of the handlebar 30.

A rotatable wheel 38 is coupled to the front fork 32. The wheel 38 includes a hub 40 from which radially extends a plurality of spokes 42 that support a rimmed-tire 44. In some embodiments a hub motor 50 may be coupled to the hub 40 so as to allow powered rotation of the wheel 38. A front brake 52A is coupled to the frame 22 or connected components and allows the user to apply a braking force to the rimmed tire 44. The brake 52A may be actuated by a cable pulled by a hand lever mounted on the handlebar as in a conventional bicycle. Braking forces may also be applied electronically through the hub motor 50. In some embodiments the brake 52A may be actuated electronically.

A controller 60 is secured to the frame 22 and controls operation of the hub motor 50 as will be described in detail. The controller 60 may provide a display control panel 62 which provides user controls to allow for selection of various operational modes. The controller 60 may also be mounted to the handlebar 30 and/or the steering column 26. The controller 60 allows the user to select a speed when the motor 50 is being utilized and to allow for application of the brake 52 and other operational functions as will be described. Hand controls 66 may be incorporated into the handlebar 30, wherein selective rotation of the controls or switches incorporated therein may be used to control modes, speed and/or braking of the device 20. The display control panel 62 and the hand controls 66 may be redundant with one another or supplement one another.

A battery pack 68 which powers the hub motor 50 and the controller 60 is mounted to the frame 22 and may be incorporated within the controller 60 or maintained as a separate component.

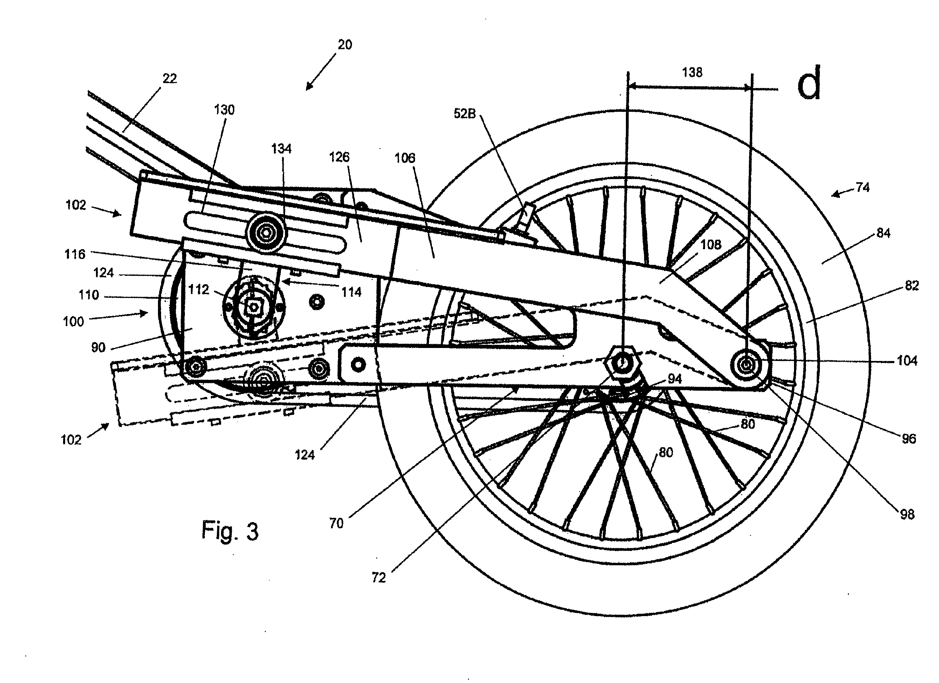

As best seen in Figs. 2 and 3, a rear wheel fork, designated generally by the numeral 70, is secured to the frame 22. A rear wheel 74, which is coupled to the fork 70, includes an axle 72 that is rotatably mounted to the fork 70. The wheel 74 includes a hub 78 that rotates about the axle 72. Extending radially from the hub 78 are a plurality of spokes 80 which are connected to a rim 82 which supports a tire 84. A gear 86 is maintained by the hub 78 such that when the gear is rotated or driven, a corresponding rotation is initiated for the wheel 74. The frame 22 includes a gear housing 90 which is secured thereto. The fork 70 is connected to the gear housing 90 and specifically includes a bracket 92 which has one end secured to the gear housing and an opposite end coupled to the wheel 74. In particular, the bracket 92 is a configuration such that one side of the bracket 92A is positioned on one side of the wheel 74 and an opposed side bracket 92B is positioned on the other side of the wheel 74. Each bracket 92A,92B provides an axle slot 94 which is mounted on and receives respective ends of the axle 72. Each bracket 92 provides for a lever mount 96 from which substantially perpendicularly extends a mount pin 98. The lever mounts 96 are coaxially aligned with one another and positioned at an end of the brackets 92A, 92B opposite the gear housing. In other words, the lever mounts 96 are positioned on one side of the axle slots 94 along their respective brackets and the opposite end of the brackets 92 are mounted to the gear housing 90.

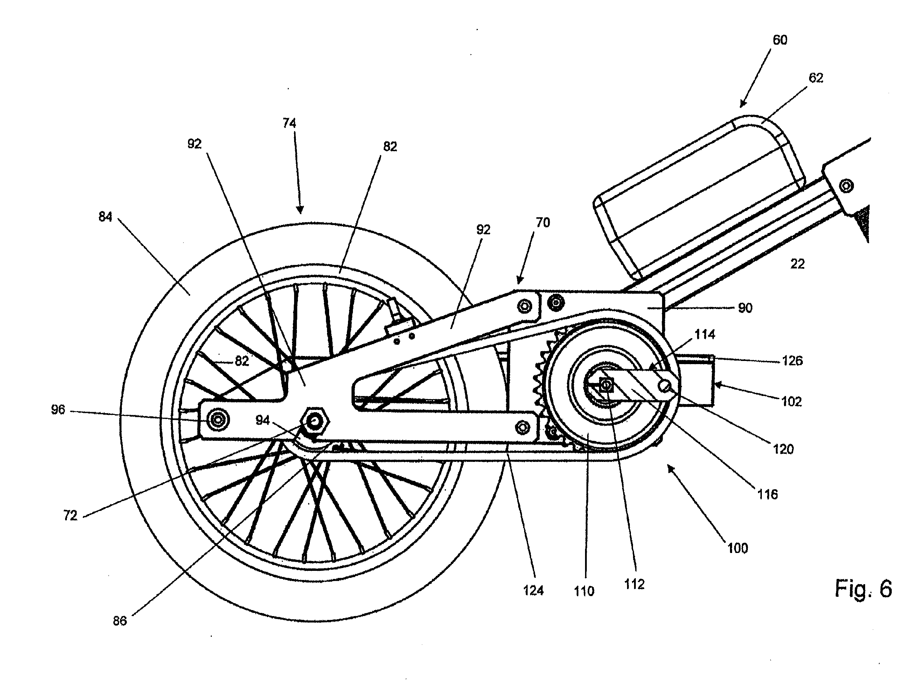

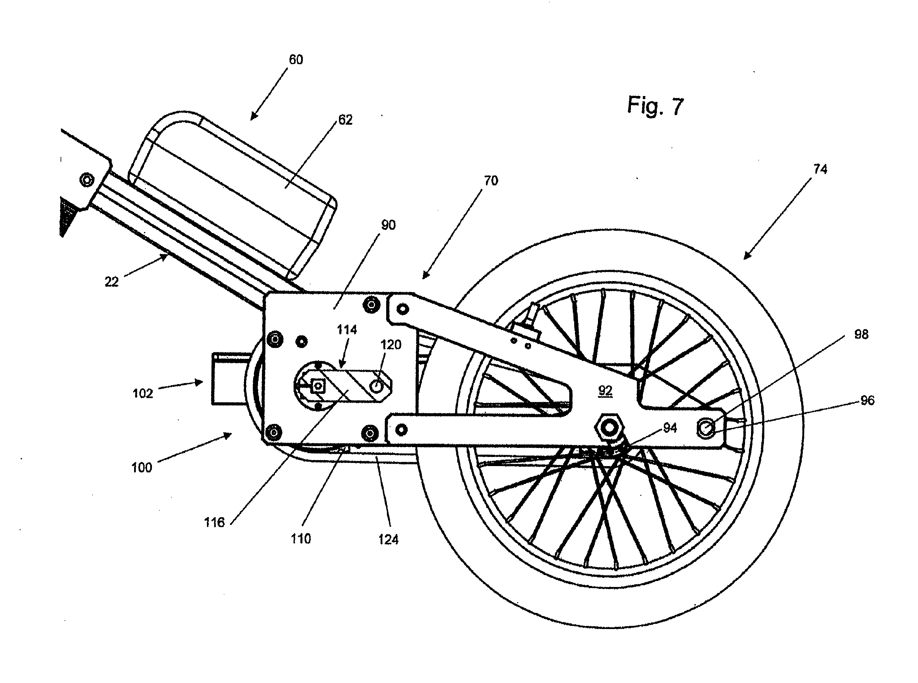

Referring now to Fig. 3, but with reference to Figs. 1, 2 and 4-7, it can be seen that a pedal mechanism is designated generally by the numeral 100. The mechanism 100 is carried by the frame 22 and coupled to the rear fork 70 and specifically the gear housing 90. The pedal mechanism 100 includes a pair of opposed pedal levers 102 which are pivotably mounted to the frame 22. In particular, each pedal lever 102 provides for a mounted end 104 that is connected to a respective mount pin 98 extending from a respective lever mount 96. Opposite each mounted end 104 is a drive end 106. And each pedal lever 102 includes an elbow 108 that is intermediate the mounted end 104 and the drive end 106. The elbow 108 serves as the vertex for an angular orientation of the drive ends 106 with respect to the mounted ends 104. Indeed, the mounted ends 104 extend angularly from the drive ends 106 at an angle of anywhere from 15 to 75°. Mounted to one or both of the brackets 92A, 92B is a rear brake 52B that engages the wheel 74 in a manner similar to the front braking mechanism 52A that engages the front wheel 38.

Interposed between the drive ends of the pedal levers 102 is a drive gear 110 that is maintained within the gear housing 90 and rotatable about an axle 112. The axle 112 extends from each side of the drive gear 110 wherein each end of the axle is connected to a crank designated generally by the numeral 114. Extending substantially perpendicularly from each end of the crank 114 are respective crank arms 116. It will further be appreciated that the crank arms 116 extend in opposite directions from one another. At the end of each crank arm 116 is a bushing end 120. An endless chain 124 links the drive gear 110 maintained in the pedal mechanism 100 to the gear 86 maintained by the hub 78 of the rear wheel 74.

Each pedal lever 102 includes a foot plate 126 extending from the drive end 106. As best seen in Fig. 2, the foot plates are sized so as to allow for the rider to position each foot thereon in any various positions. In other words, the rider may position their toes near or over a front edge of the foot plate or the rider can place their heel near a back edge of the foot plate, or anywhere in between. It will be appreciated that the surface of the foot plate may provide frictional materials so as to ensure that the user's foot does not slip off of the pedal lever inadvertently. The foot plate 126 is also oversized so as to allow for various positions so as to accommodate different heights of the user and body types. Each foot plate 126 provides an elongated slot 130 that runs substantially parallel or along the length of the pedal lever. A bushing 134 is slidably retained within each elongated slot 130 and is coupled to a respective bushing end 120 of the crank arm 116. Skilled artisans will appreciate that the bushing 134 is shaped with extending edges so as to be retained within the slot 130 while still allowing movement therein. Pushing down on a pedal lever results in movement of the bushing 134 within the elongated slot which, in turn, causes rotation of the crank arms 116. This results in rotation of the axle 112 which turns the drive gear 110 and results in corresponding rotation via the chain 124 of the wheel 74. As best seen in Fig. 3 a distance 138 (d) separates the rear wheel axle 72 from the mount pins 98 which serves as a pivot point for the pedal lever.

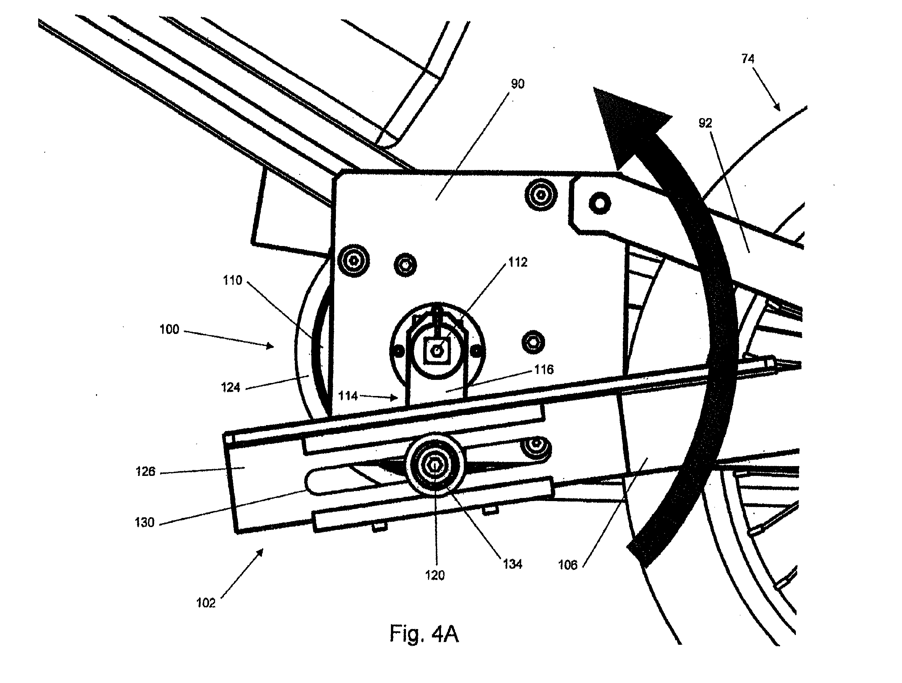

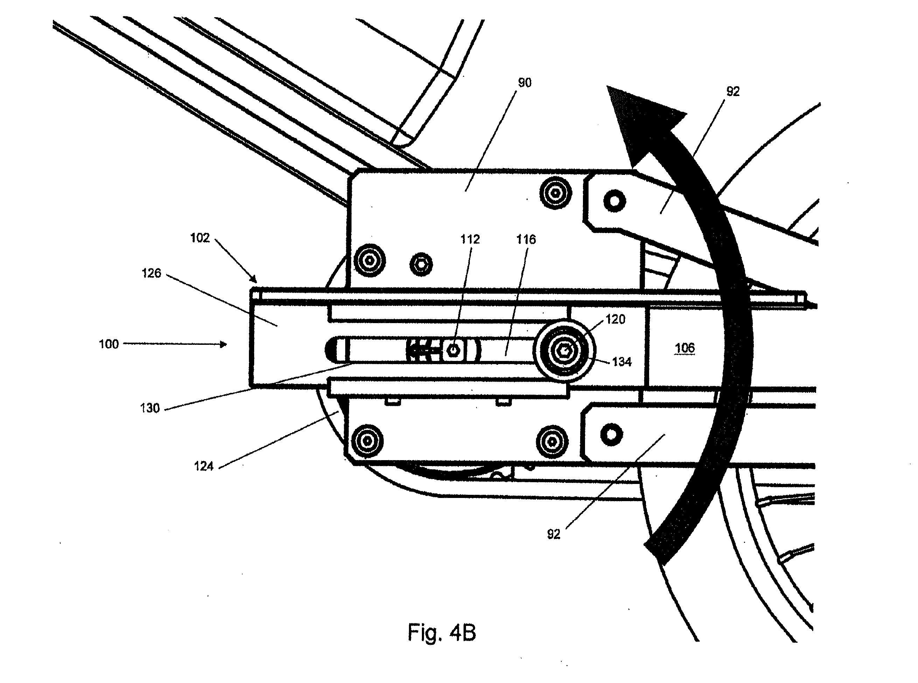

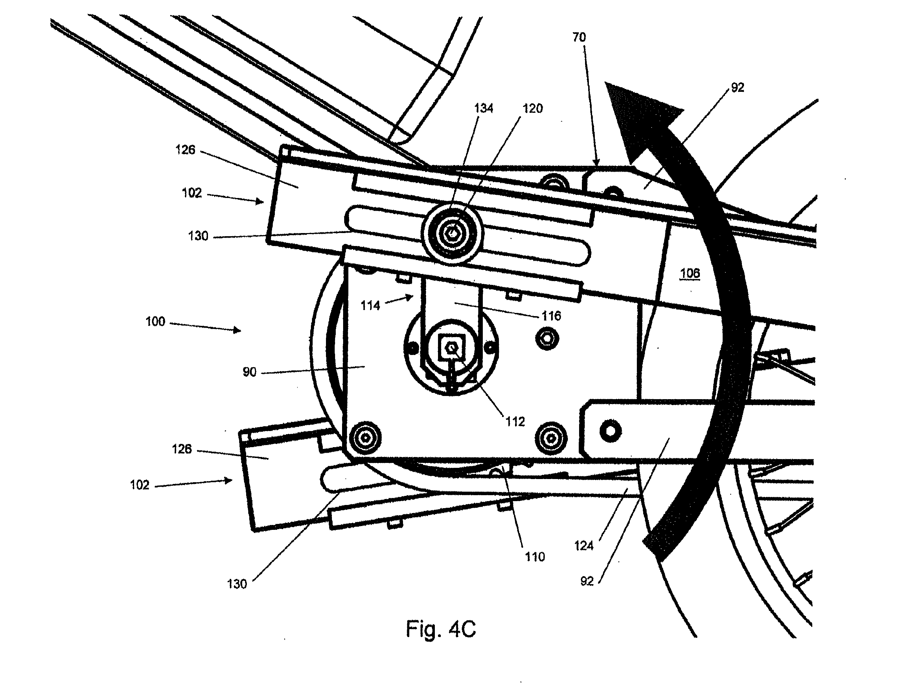

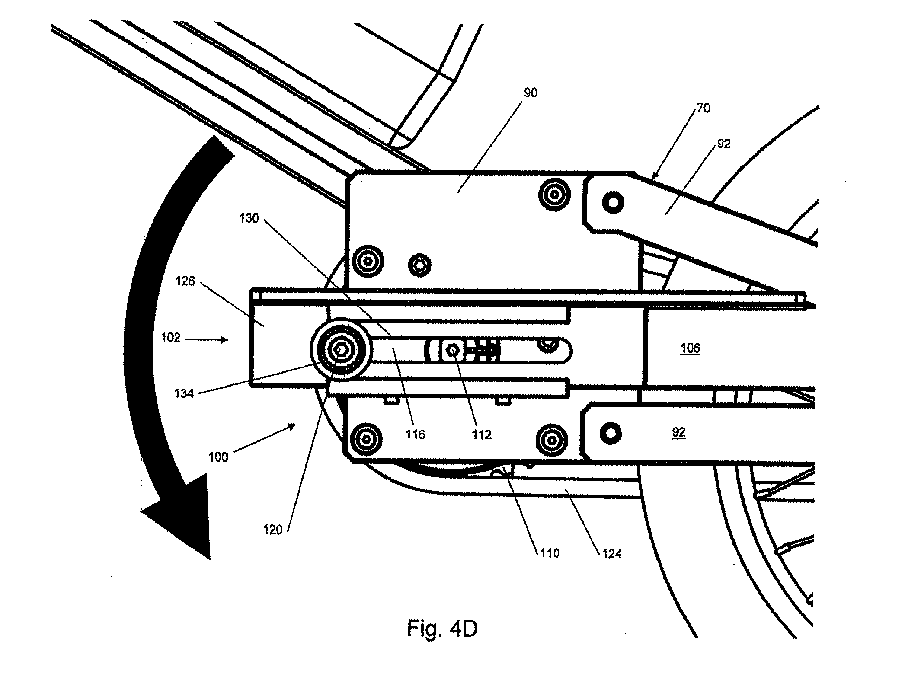

Referring now to Figs. 4A-D, it can be seen that the pedal lever is shown in various positions so as to result in counter-clockwise rotation of the drive gear 110. As seen in Fig. 4A, the pedal lever is in its lower most position and the bushing end 120 is medially disposed within the elongated slot 130. As a downward force is applied to the pedal lever on the other side of the gear housing 90, the crank arm 160 is rotated counter clockwise and, as seen in Fig. 4B, the bushing end 120 is moved along to an end of the elongated slot. This rotational motion continues along, so as seen in Fig. 4C, the crank arm is 180° opposed from its position in Fig. 4A and the bushing end 120 is returned medially along the elongated slot 130. In this position the rider's full weight can then be applied to the foot plate 126 and as seen in Fig. 4D the bushing 134 and bushing end 120 are directed toward the other end of the elongated slot. In other words, the bushing 134 is slidably moved so as to be in a position opposite its position as shown in Fig. 4B. This down-up-down movement cycle of the pedal lever 102 results in a complete rotation of the drive gear 110.

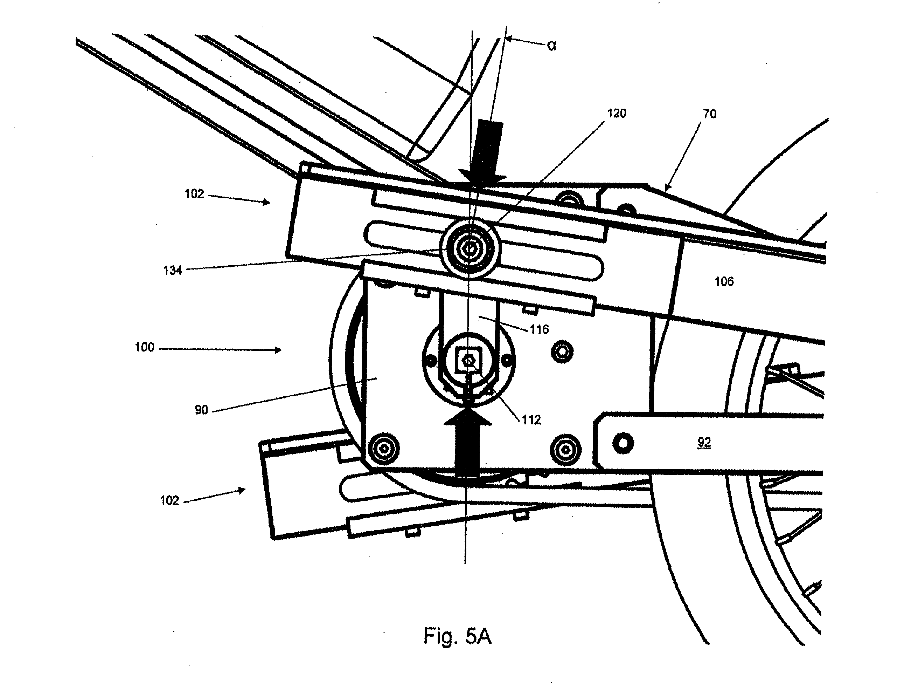

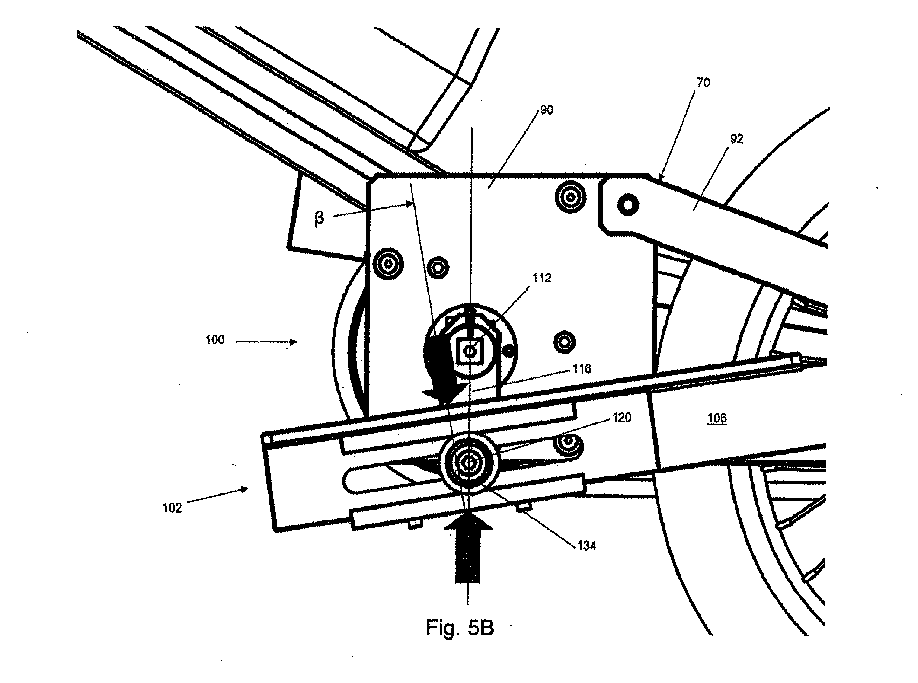

Figs. 5A and 5B show the pedal levers in different positions and show their angular disposition with respect to the crank 114. In particular, Fig. 5A shows the facing pedal lever in an upper position such that the force applied by the rider's left foot is directed at an angle of about 5 to 20° with respect to the center line of when the axle 112 and the bushing 120 are vertically aligned with one another, wherein the bushing 134 is positioned above the axle 112. As best seen in Fig. 5B, when the facing pedal lever is in a lower position, an angular force is still applied even though the busing 134 is vertically aligned with the axle 112 such that the bushing 134 is directly underneath and vertically aligned therewith. It will be appreciated that the normal forces applied at the angular orientation different than vertical to the crank arm orientation removes the dead-center effect that is commonly found with normal rotational bicycle pedals.

As previously discussed for conventional bicycles, the pedal motion is always circular. Such circular motion of the feet is very difficult for a human when standing free. As a result, the rotary pedals are not ideally suited for rotation when the rider is standing in the upright position. For the device 20, the pedals are designed to move generally latitudinally instead. In other words, the pedal configurations do not swing and the left and right pedals move only simultaneously up and down in general so the weight of the rider naturally shifts between legs to the lower leg which is in the straight manner for easy standing. The foot plates are generally flat and steady when it comes to the lower positions of the up/down motion so as to provide a comfortable and stable standing platform for the rider. By eliminating the dead-center effect, the pedals reach the apex position in such a manner that the pedal is inclined so that the normal force applied by the user is at an angle alpha (α) as seen in Fig. 5A thereby pushing the crank forward and downward past the apex. The pedal can also be positioned to incline slightly at the lowest position at angle beta (β) as seen in Fig. 5B to help the opposite pedal -- the user's right foot pedal -- at the apex position to move the crank so as to turn and overcome the dead-center effect. Each of the pedals has a moment lever arm which extends toward the rear part of the device.

As best seen in Figs. 3, 6 and 7, the pivot point of the pedal levers is at position 96 so as to provide a lengthy moment arm which in turn provides a mechanical advantage to the user so as to easily exert force onto the crank arm and drive gear and rotate the wheel. Moreover, by connecting the pedal levers to a rear part of the brackets 92A, 92B through the rotational joints at each end thereof, and by providing them in a coaxially aligned manner, the position of the rotational joint in relation to the drive gear and the angle of the lever sets the inclinations of the pedals as shown in Figs. 4 and 5.

Still another advantage of the pedal mechanism is that the whole body weight of the standing rider contributes to a much higher pedaling force. Because of this efficient use of the rider's body weight, the device needs a crank arm of no more than half the length of a standard bicycle crank arm. In other words, the latitude measure of pedaling motion is similar to or smaller than that of a standard stair step. As a result, the knees of the rider do not bend as much as in a conventional bicycle and the rider is able to use their body weight to press down on the pedal rather than using the leg muscles as in a conventional bicycle. Moreover, different length crank arms can be used depending on the preference of the user. This interchangeability of the crank arms on the device allows the user to have an up/down pedaling motion particularly suited for their body build.

Still another advantage of the pedal mechanism is that the length of the pedal levers allow the rider to stand more to the front or to the rear of the foot plates in relation to the position of the handlebar 30. In a different standing position along the length of the pedal, the pedaling force and height of the pedaling potion also varies slightly. As a result, the long pedals allow the individual rider to find one's most comfortable riding position and provide a wide standing platform where the entire foot can rest upon. For example, a rider shorter in height is normally lighter in weight and has shorter arms and can more efficiently use his body weight to drive the device by standing closer and more comfortably to the handlebar. In contrast, a taller and heavier rider with longer arms may choose to stand farther away from the steering bar. Still another advantage is that the device with a seat is more compact than a conventional bicycle. Indeed the device can be folded in such a manner that the steering column is retractable and adjusted easily to suit different riders.

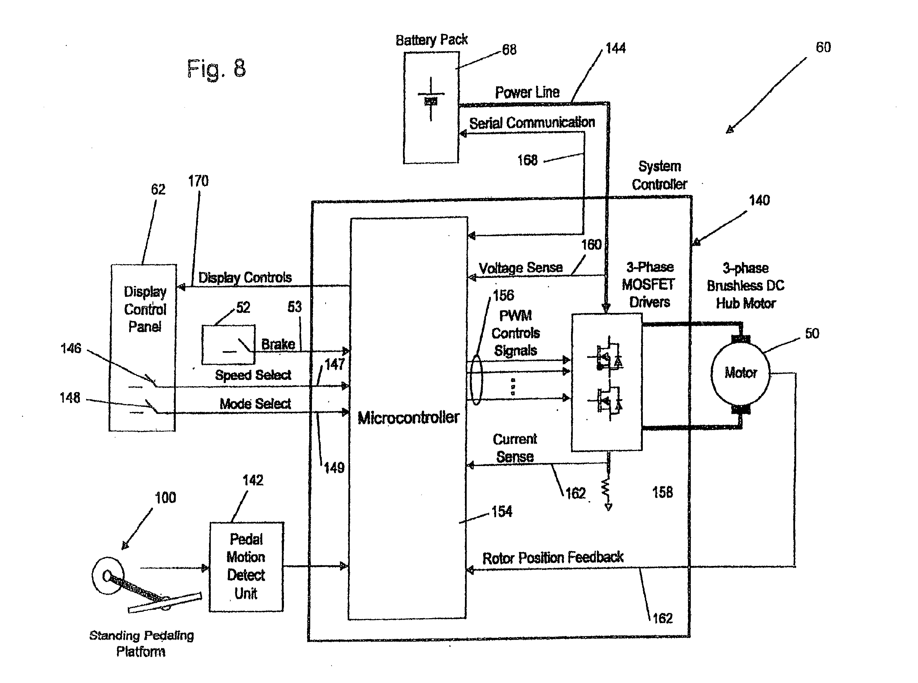

Referring now to Fig. 8, it will be appreciated that some embodiments of the device 20 may utilize a motorized hub at the front wheel so as to assist in movement of the device. To enable use of the motorized hub and other operational features of the device 20, the controller 60 includes a system controller 140. The display control panel 62 is coupled to the system controller 140 as is the pedal mechanism 100. In particular, a motion detection sensor 142 is associated with the mechanism 100 and provides an input to the system controller. In some embodiments, the motion detection sensor 142 may be mounted in the gear housing 90. The sensor 142 generates data signals to the microcontroller with information related to the direction of rotation of the gear 86, rotational speed of the gear 86, and other related information. The battery pack 68 is also connected to the system controller by a power line 144.

Included in the display control 62 is a speed select switch 146 which generates a speed input signal 147 and a mode select switch 148 which generates a mode input signal 149. Additionally, the front and rear brakes 52A, 52B may generate a brake input signal 53 which is also provided to the system controller 140.

A microcontroller 154 is maintained within the system controller 140. The microcontroller provides the necessary hardware and software for receiving the various enumerated inputs and generating appropriate outputs so as to operate the motor 50 and the device 20 in a desired manner. In particular the microcontroller 154 generates pulse width modulation control signals 156 that are received by three-phase MOSFET drivers 158. The drivers 158 also directly receive the power line voltage 144 from the battery pack 68. A voltage sense device 160 is associated with power line 144 and this input is also provided to the microcontroller 154. Yet another input provided to the microcontroller 154 is a rotor position feedback 162 that provides operational information regarding the motor 50. Additionally a two-way link between the battery pack 68 and the microcontroller is provided by signal line 168.

With the display control panel 62, the user may set various inputs such as the speed and mode, wherein the speed may be designed generally as low, middle or high or any other desired number of increments. A mode may include four different modes such as power off, power cruising, power assist and parking. These various modes and speed limit selections allow for different operational features. For example, in a power off mode, only the user can provide for motion of the device. In other words, only human pedaling moves the device and the electric motor is not enabled or used in such a mode. In a power cruising mode, only the motor is utilized at any of the designated speeds. As such, at a constant speed, pedaling is required only to start the electric motor. The power to the electric motor is disengaged when either of the front or rear brakes is applied. In a power assist mode, both the rider and the motor are utilized to propel the device. Accordingly, the power to the electric motor is disengaged when the brake is applied or when the rider stops pedaling. Finally, in a parking mode, only a low speed is utilized and a middle or high speed is ignored. As such, a constant walking speed is required and no pedaling is required as the device is driven by the electric motor only. As will be appreciated, both the speed and mode select are direct rider input switches. Accordingly, in parking mode the motor will be driven with electrical power to provide a constant walking speed for the parking of the device without any need of pedal motion input signals. In the power assist mode, the motor is driven with electrical power with the microcontroller detects pedal motion via sensor 142. The motor power is dependent on the speed limit setting -- low, middle or high. And in a constant speed mode, the microcontroller regulates the power so as to maintain a pre-set speed. And finally, in a conventional bicycle mode, the electronics are switched off and no power is provided to the motor. As such, the device can be provided without the battery back or, if the battery is low, the device can still be propelled under human power.

The display control panel 62 receives input 170 from the microcontroller. The display control panel may include a group of indicator lights that are driven by the microcontroller to display information such as the state of battery charge, i.e., the amount of remaining power; the current operating mode selected by the user in the various power assist, parking, cruising, and power off modes. The switches associated with the speed and mode are located on the display panel 62 for rider selection while the brake switches are located inside the mechanical left and right brake levers which may be maintained on the handlebar or elsewhere. The microcontroller is configured so as to monitor if the braking is applied and will turn off the motor electrical driving power upon detection of a brake signal from either of the switches. The direction of pedal and pedaling frequency are obtained by the pedaling motion detection unit 142 which is input and used by the microcontroller 154 to compute and control motor rotation speed depending on the mode selected. Operation of the motor is verified by the input signal 162 so as to adjust generation of the control signals 156 as needed.

Thus, it can be seen that the objects of the invention have been satisfied by the structure and its method for use presented above. While in accordance with the Patent Statutes, only the best mode and preferred embodiment has been presented and described in detail, it is to be understood that the invention is not limited thereto or thereby. Accordingly, for an appreciation of the true scope and breadth of the invention, reference should be made to the following claims.

## Claims

1. A pedal mechanism (100) for a wheeled device comprising:
- a frame (22);
- at least one wheel (74) having a geared hub (78), said wheel (74) rotatably supported by said frame (22);
- at least one pedal lever (102) pivotably mounted to said frame (22) at a mounted end (104), each said lever (102) having a drive end (106) opposite said mounted end (104);
- a rotatable drive gear (110) carried by said frame (22), said rotatable drive gear (110) having an axle (112) extending from at least one side;
- a crank (114) coupled between said pedal lever drive end (106) and said axle (112); and
- an endless chain (124) coupled between said geared hub (78) and said rotatable drive gear (110),
**wherein** movement of said at least one pedal lever (102) causes rotation of said wheel (74).

2. The pedal mechanism (100) according to claim 1, further comprising:
- a foot plate (126) extending from said drive end (106) of said pedal lever (102), said foot plate (126) having an elongated slot (130); and
- a bushing (134) slidably retained in said elongated slot (130), said crank (114) having a bushing end coupled to said bushing (134),
**wherein** linear motion of said foot plate (126) rotates said crank (114) and said drive gear (110).

3. The pedal mechanism (100) according to claim 2 **wherein** said bushing (134) slides from end to end of said elongated slot (130) as said drive end (106) is linearly moved up and down.

4. The pedal mechanism (100) according to any one of claims 1 to 3, further comprising:
opposed pedal levers (102), wherein a first pedal lever (102) is mounted to one side of said frame (22) and a second pedal lever (102) is mounted to an opposite side of said frame (22),
**wherein** said mounted ends (104) are radially positioned on one side of said geared hub (110) and said drive ends (106) are radially positioned on an opposite side of said geared hub (110).

5. The pedal mechanism (100) according to any one of claims 1 to 4, wherein each said pedal lever (102) has an elbow (108) between said mounted end (104) and said drive end (106), **wherein** each said mounted end (104) angularly extends from said elbow (108) at an angle of between 15 to 75°.

6. The pedal mechanism (100) according to claim 5, **wherein** a distance from said elbow (108) to said mounted end (104) is less than or equal a distance from a center of said geared hub (110) to where said mounted end (104) is mounted.

7. The pedal mechanism (100) according to any one of claims 1 to 6, **wherein** mounted ends (104) of pedal levers (102) are coaxially aligned with one another.

8. The pedal mechanism (100) according to any one of claims 1 to 6, **wherein** said crank (114) has pedal ends that are substantially diametrically opposed to one another, wherein one said pedal end is connected to one said pedal lever drive end (106) of opposed pedal levers (102) and the other said pedal end is connected to the other said pedal lever drive end (106) of opposed pedal levers (102).

9. A wheeled locomotion device (20), comprising:
- a frame (22);
- at least one wheel (74) coupled to said frame (22);
- a human-effort pedal mechanism (100) coupled to and adapted to rotate said at least one wheel (74), said pedal mechanism (100) having a motion detection sensor (142);
- a motor (50) coupled to and adapted to rotate said at least one wheel (74);
- a system controller (140) connected to and receiving input from said motor (50) and said motion detection sensor (142); and
- a user control panel (62) connected to said system controller (140), said system controller (140) programmed to:
- receive input from said motor (50);
- receive input from said motion detection sensor (142);
- receive user input from said user control panel (62) as to at least one of a speed setting and a mode setting; and
- generate a control signal to selectively adjust operation of said motor (50) based on at least two of said inputs.

10. The device (20) according to claim 9, further comprising:
a brake (52) connected to said controller (140) and generating a brake input signal (53) received by said system controller (140), said system controller (140) programmed to adjust operation of said motor (50) based upon said brake input signal (53).

11. The device (20) according to claim 10, **wherein** said user control panel (62) provides at least one of the following modes:
- a power off mode that only allows use of said human-effort pedal mechanism (100);
- a power cruising mode that only allows use of said motor (50) to propel the device (20);
- a power assist mode which allows use of said human-effort pedal mechanism (100) and said motor (50); and
- a parking mode which allows only use of said motor (50) at a pre-selected speed.

12. The device (20) according to claim 11, **wherein** said motor (50) is allowed to operate at at least three speeds designated as low, medium and high, where said power assist mode allows use of all three speeds and use of said motor (50) is initiated by detected input from said human-effort pedal mechanism (100).

13. The device (20) according to claim 11 or 12, **wherein** in said parking mode, said system controller (140) generates said control signal to provide a constant walking speed for said device (20) by said motor (50) without any need of input from said motion detection sensor (142).

14. The device (20) according to any one of claims 9 to 13, further comprising:
- a microcontroller (154) receiving inputs from said motor (50), said motion detection sensor (142) and said user control panel (62);
- a battery pack (68) with a power line, said power line generating a voltage sense signal received by said microcontroller (154); and
- three phase MOSFET drivers (158) connected to said power line, said drivers (158) providing power to said motor (50) and generating a current sense signal received by said microcontroller (154);
- said microcontroller (154) generating pulse-width modulated control signals received by said drivers (158) to control operation of said motor (50).

15. The device (20) according to claim 14, **wherein** said motor (50) generates a rotor position feedback signal received by said microcontroller (154) for adjustment of said pulse-width modulation control signals.
